# EUROPÄISCHE PATENTSCHRIFT

(11) **EP 1 963 690 B1**
(45) Veröffentlichungstag und Bekanntmachung des Hinweises auf die Patenterteilung: **17.02.2010**
(21) Anmeldenummer: 06841107.3
(22) Anmeldetag: 21.12.2006
(51) Int. Cl.: F16B 39/34, F16B 39/38

(54) **SCHRAUBMUTTER, VERFAHREN ZU IHRER HERSTELLUNG UND WEKZEUG DAFÜR**
SCREW NUT, METHOD OF PRODUCTION THEREOF AND CORRESPONDING TOOL
ECROU, PROCEDE DE FABRICATION DUDIT ECROU ET OUTIL A CET EFFET

(30) Priorität: 22.12.2005 DE 102005062045
(43) Veröffentlichungstag der Anmeldung: 03.09.2008
(73) Patentinhaber: Flaig, Hartmut, D-78554 Aldingen (DE)
(72) Erfinder: Flaig, Hartmut, D-78554 Aldingen (DE)
(74) Vertreter: Nüsse, Stephan
(86) Internationale Anmeldenummer: PCT/EP2006/012418
(87) Internationale Veröffentlichungsnummer: WO 2007/076968

(56) Entgegenhaltungen:
- FR-A- 2 557 652
- US-A- 2 363 680
- US-A- 2 385 390
- US-A- 2 952 289

## Beschreibung

Die Erfindung betrifft eine Schraubmutter aus metallischem Werkstoff mit einer Gewindebohrung und einer deren Längsachse radial umlaufend zugeordneten Innennut gemäß dem Oberbegriff des Anspruchs 1. Zudem erfasst die Erfindung ein Verfahren zur Herstellung der Schraubmutter gemäß dem Oberbegriff des Anspruchs 14 sowie ein dafür entwickeltes Werkzeug gemäß dem Oberbegriff des Anspruchs 18.

Eine Mutter und ein Verfahren der eingangs genannten Art ist FR 2 557 652 zu entnehmen.

In US 2,363,680 ist eine Mutter anderer Art beschrieben, bei der ein Ringkragen umgeschlagen wird und an dessen nach innen weisender Seitenfläche ein Gewinde angebracht wird. Der umgeschlagene Teil des Ringkragens hat eine Wandstärke, welche größer als eine Wandstärke des gebogenen verbindenden Teils und des benachbarten, nicht umgeschlagenen Teils ist.

US 2,952,289 offenbart eine Mutter, bei der ein Ringkragen soweit umgebogen und anschließend axial gedrückt wird bis er so nah wie möglich am freien Ende der Mutter positioniert ist.

US 2,385,390 offenbart eine Mutter mit einem Ringkragen, der Ausschnitte aufweist.

Eine Mutter anderer Art ist aus dem deutschen Patent 3 05 761 zu entnehmen, wobei zur Ausbildung einer Sicherheitsmutter die Mutter mit einer ringförmigen Aushöhlung versehen wird, was durch ein Bohrgerät auf einer Werkzeugmaschine mit umlaufender Spindel erfolgt, wobei die Spindel mit einem Futter zum Halten der Muttern in Einzahl oder Mehrzahl während des Aushöhlens ausgerichtet ist. Die Höhlung wird gebildet, bevor das Gewinde eingeschnitten ist. Die Höhlung befindet sich in gleichem Abstand von beiden Endflächen der Mutter. Das Gewinde wird auf beiden Seiten der Höhlung mit gleicher Steigung geschnitten. Danach wird die Mutter einer Pressung ausgesetzt, um einen Versatz der Gewindeteile beidseits der Höhlung zueinander zu erreichen.

Auch das Schweizer Patent 2 49 469 gibt eine Sicherungsmutter an, die an ihrem entlasteten Ende mit einer Rille durch Abtrennen eines Teils des Gewindes versehen ist, so dass ein kreisringförmiger Lappen entsteht, welcher nach dem Hauptteil des Gewindes eingestaucht wird. Auch dadurch wird eine Sicherungsschraubmutter zur Verfügung gestellt.

Das deutsche Patent 4 90 889 beschreibt eine Sicherungswirkung einer Mutter, die dadurch erreicht wird, dass in der Gewindebohrung, bzw. im Kern der Mutter, eine Ringnut mit keilförmigem Querschnitt angebracht wird. Auch in diesem Fall wird im oberen Teil der Mutter das durchgehende Gewinde durch eine Aussparung unterbrochen, welche so gestaltet ist, dass dadurch eine dünne Wand erzeugt wird, so dass ein oberes Teilstück federnd wirkt. Danach wird das obere Teilstück durch Zusammenpressen im Durchmesser verengt und gleichzeitig in der Höhe zusammengedrückt, um eine Haftwirkung der Mutter zu erreichen. Das durch die Aussparung verbliebene dünne Wandstück erzeugt dabei eine federnde Wirkung auf den verengten und steigungsversetzten Flankendurchmesser des oberen Gewindeteils.

Diese und andere bekannte Muttern haben bezüglich ihrer Funktion erhebliche Nachteile, insbesondere aber im Hinblick auf die aufwändige Fertigung, die spanend durch Entfernen eines Teils des Gewindes oder der Wände der Mutter erfolgen muss, um eine federnde Sicherungswirkung eines Gewindeteils zu erreichen.

In Kenntnis dieser Gegebenheiten hat sich der Erfinder das Ziel gesetzt, eine effizient einsetzbare und vor allem auf einfache sowie schnelle Weise herstellbare Schraubmutter zu schaffen.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Erfindungsgemäß ist an eine der Stirnflächen der Schraubmutter ein Ringkragen angeformt und querschnittlich so achswärts gebogen, dass er mit einem die Gewindebohrung als Auflagefläche umgebenden. Abschnitt jener Stirnfläche einen dieser unmittelbar zugeordneten Aufnahmeschlitz begrenzt.

Nach einem weiteren Merkmal der Erfindung bildet der querschnittlich verformte Ringkragen der -- einen von Wandflächenabschnitten bestimmtem mehreckigem Grundriss aufweisenden -- Schraubmutter einen Formkragen, dessen Außenfläche in radialem Abstand zu den achsparallelen Kanten der Wandflächenabschnitte der Schraubmutter verläuft; der Aufnahmeschlitz ist dabei nahe der Außenfläche des Formkragens angeordnet sowie letzterer bevorzugt mit einer querschnittlich achswärts gekrümmten Außenfläche verstehen.

Bevorzugt soll der zwei parallele Randkanten anbietende Aufnahmeschlitz querschnittlich in einem Winkel zu diesen Randkanten geneigt sein; jedoch liegt es auch im Rahmen der Erfindung, den Aufnahmeschlitz in einer Diametralebene der Schraubmutter verlaufen zu lassen.

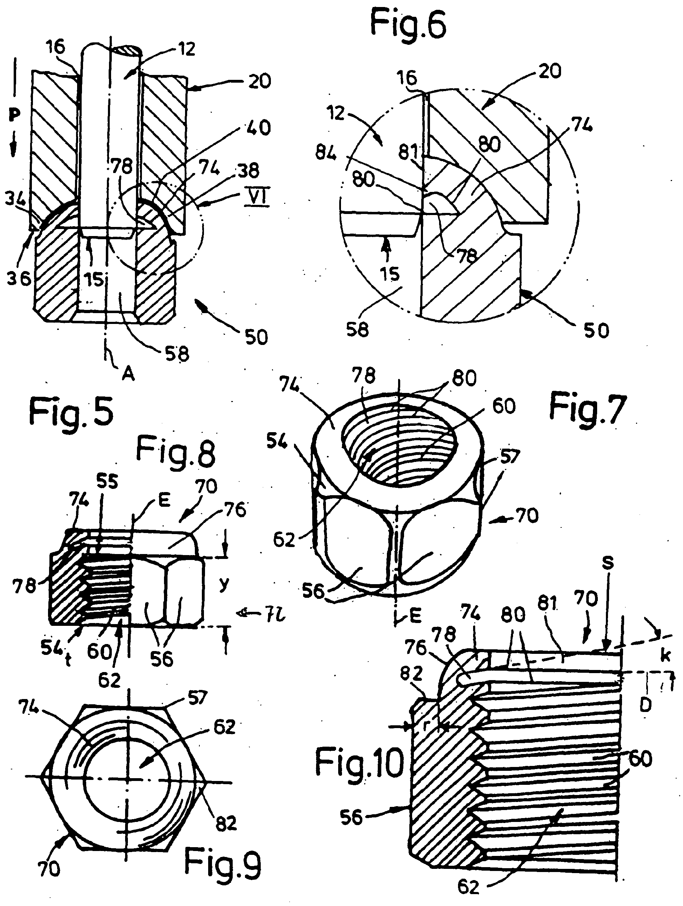

In einer bevorzugten ersten Variante der Erfindung, die insbesondere in Bezug auf die Fig. 7 bis Fig. 10 detailliert im Rahmen einer ersten bevorzugten Ausführungsform der Erfindung erläutert ist, ist der Ringkragen querschnittlich derart achswärts gebogen, dass der Aufnahmeschlitz zur Gewindebohrung hin offen ist. Das heißt, die Randkanten des Aufnahmeschlitzes sind zur Gewindebohrung hin beabstandet.

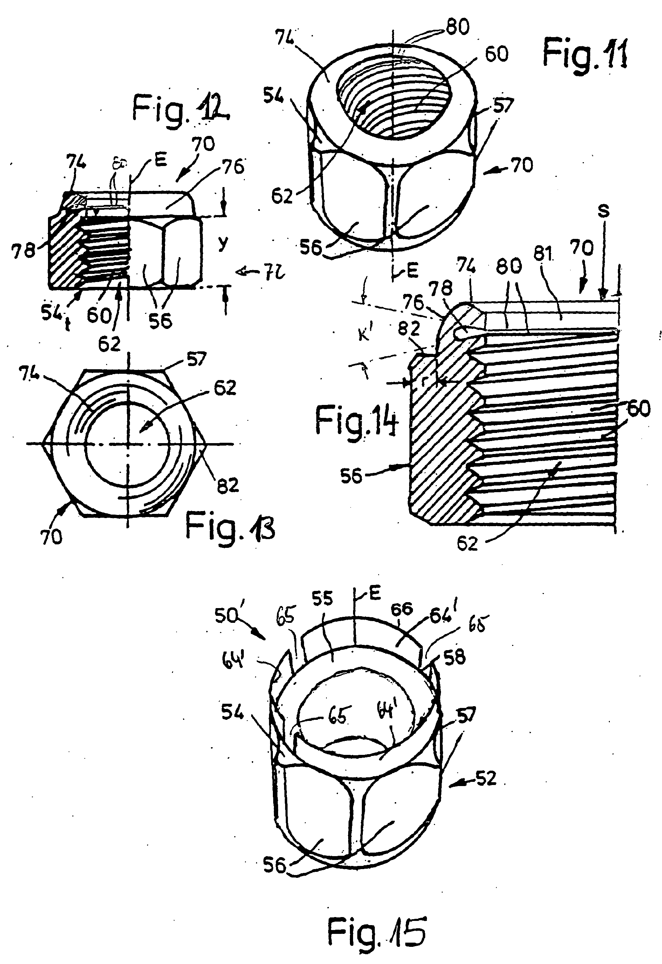

In einer zweiten Variante, die insbesondere in Bezug auf Fig. 11 bis Fig. 14 im Rahmen einer weiteren besonders bevorzugten Ausführungsform der Erfindung im Detail erläutert ist, ist der Ringkragen querschnittlich derart achswärts gebogen, dass der Aufnahmeschlitz zur Gewindebohrung hin geschlossen ist. Das heißt, die Randkanten des Aufnahmeschlitzes liegen zur Gewindebohrung hin praktisch aneinander.

In beiden Varianten ist ein im Stirnbereich des gebogenen Formkragens eingeformtes Gewinde zum übrigen Gewinde der Schraubmutter versetzt, so dass die erfindungsgemäße Wirkung einer Sicherung beim Aufschrauben auf einen Bolzen oder eine Schraube durch eine federnde gegen die Gewindeflanken des Bolzens oder der Schraube wirkende Kraft erzeugt wird. Der Versatz des im Stirnbereich gebogenen Formkragens angebrachten Gewindes relativ zum übrigen Gewinde der Schraubmutter ist vergleichsweise gering und beträgt gegebenenfalls lediglich einige wenige, Zehntel Millimeter, beispielsweise 1 oder 2 Zehntel Millimeter, was zur Erzeugung der erfindungsgemäßen Wirkung ausreicht. Im übrigen ist ein derartiger Versatz, wie von der Erfindung erkannt, praktisch nur durch den erfindungsgemäßen achswärts gebogenen Ringkragen erreichbar.

Um eine Federwirkung des Formkragens zu variieren, insbesondere flexibler zu gestalten, kann es von Vorteil sein, dass der Ringkragen - und entsprechend der Formkragen. - entlang des Umfangs der Schraubmutter abschnittsweise verläuft. Dazu ist es von Vorteil, dass benachbarte Abschnitte des Ringkragens/Formkragens durch eine Unterbrechung, z.B. eine Einschneidung oder sonstigen Spalt, vollständig oder teilweise voneinander getrennt sind. Ein einzelner Abschnitt hat gegebenenfalls eine auf eine bestimmte Verwendung abzielende vorteilhaftere Federwirkung im Vergleich zu einem entlang eines vollen Umfangs der Schraubmutter verlaufenden Formkragens.

Von besonderer Bedeutung ist das Merkmal, dass in dem Aufnahmeschlitz ein dessen Randkanten achswärts überragendes Halte- und/oder Dichtorgan festgelegt ist, das beispielsweise innenseitig einem Schraubstift anliegt, der im Gewinde der Schraubmutter festliegt.

Das erfindungsgemäße Verfahren zum Herstellen einer Schraubmutter gibt vor, dass an einer Stirnfläche einer dem Grundriss der Schraubmutter, entsprechenden Rohlingsmutter ein Ringkragen mit kreisförmiger freier Oberkante angeformt und durch ein axial an letztere herangeführtes Druckwerkzeug zur Längsachse der Rohlingsmutter hin querschnittlich gekrümmt wird. Zudem soll die freie Oberkante des Ringkragens umlaufend parallel an die benachbarte Stirnfläche der Rohlingsmutter herangeführt und in Abstand zu dieser angeordnet werden.

Erfindungsgemäß wird zudem der Ringkragen in einem Stirnbereich an seiner Oberkante beim Verformen aufgestaucht, so dass jener Stirnbereich einen größeren Querschnitt hat als der anschließende Bereich des Formkragens.

Nach einem weiteren Merkmal des erfindungsgemäßen Verfahrens wird in einen axialen Lochkanal der Rohlingsmutter ein Innengewinde eingeschnitten oder auf andere Weise eingeformt, insbesondere auch in den Stirnbereich des gebogenen Formkragens. Um die Schraubmutter zu komplettieren, soll letzterer im übrigen nach Einformung des Innengewindes zu diesem hin versetzt werden.

Dies kann - soweit nicht bereits beim Verbiegen des Ringkragens geschehen - derart erfolgen, dass die Randkanten des Aufnahmeschlitzes zur Gewindebohrung hin beabstandet sind oder aufeinanderliegen. Der Versatz bewirkt eine federnd klemmende Kraft auf die Gewindeflanken eines Bolzens oder Schraube beim Verschrauben mit der Schraubmutter.

Ein für die Durchführung des Verfahrens geeignetes Werkzeug enthält in einem Gehäuse einen Führungskanal für einen Druckstempel, der an einem von einem Ringrand einer Werkzeugstirnfläche gebildeten Aufnahmebereich für ein Werkstück endet; der Druckstempel lagert im Führungskanal axial verschiebbar. Zudem soll jener Ringrand eine querschnittlich zur Stirnfläche hin einwärts gekrümmte Innenfläche aufweisen, welche das Krümmen des Ringkragens während des Pressvorganges beeinflusst.

Als günstig hat es sich erwiesen, eine freie Druckstirn des Druckstempels auf das Werkstück innerhalb von dessen Ringkragen aufzusetzen, wobei an ihm das Gehäuse dem Ringkragen des Werkstückes zuführbar angeordnet ist.

Nach einem weiteren Merkmal der Erfindung ist das der freien Druckstirn ferne Ende des Druckstempels mit wenigstens einem radial abkragenden Anschlagorgan versehen; in dessen Bewegungsbahn ist eine Innenstufe des Gehäuses als Gegenanschlag angeordnet.

Insgesamt ergibt sich eine bestechende Lösung für die vom Erfinder gesehene Aufgabe.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Seitenansicht eines teilweise geschnittenen Druck erzeugenden Werkzeuges mit ihm in seiner Längsachse -- in Abstand -- zugeordnetem und ebenfalls teilweise geschnittenem Werkstück;
- Fig. 2:: die Draufsicht auf das Werkstück der Fig. 1;
- Fig. 3:: eine Schrägsicht auf das gegenüber Fig. 1, Fig. 2 vergrößert wiedergegebene Werkstück;
- Fig. 4:: die teilweise geschnittene Seitenansicht des Werkzeuges mit teilweise aufgenommenem Werkstück;
- Fig. 5:: einen vergrößerten Ausschnitt des längsgeschnittenen Werkzeuges mit verformtem Werkstück;
- Fig. 6:: einen vergrößerten Ausschnitt aus Fig. 5 nach deren Pfeil VI;
- Fig. 7:: eine der Fig. 3 entsprechende Darstellung des verformten Werkstückes der Schraubmutter;
- Fig. 8:: das Werkstück nach seiner Bearbeitung, die Schraubmutter in teilweise geschnittener Darstellung;
- Fig. 9:: die Draufsicht auf das bearbeitete Werkstück, die Schraubmutter, der Fig. 8;
- Fig. 10:: eine gegenüber Fig. 8 vergrößerte Teilwiedergabe des bearbeiteten Werkstückes, der Schraubmutter;
- Fig. 11:: eine der Fig. 3 entsprechende Darstellung des verformten Werkstücks der Schraubmutter gemäß einer abgewandelten Ausführungsform;
- Fig. 12:: das Werkstück nach seiner Bearbeitung, die Schraubmutter, gemäß der abgewandelten Ausführungsform nach Fig. 11 in teilweise geschnittener Darstellung;
- Fig. 13:: die Draufsicht auf das bearbeitete Werkstück, die Schraubmutter, gemäß der abgewandelten Ausführungsform nach Fig. 11;
- Fig. 14:: eine gegenüber Fig. 12 vergrößerte Teilwiedergabe des Werkstücks, der Schraubmutter, gemäß der abgewandelten Ausführungsform nach Fig. 11;
- Fig. 15:: eine Schrägsicht auf eine gegenüber Fig. 1, Fig. 2 vergrößert wiedergegebene, abgewandelte Ausführungsform eines Werkstücks.

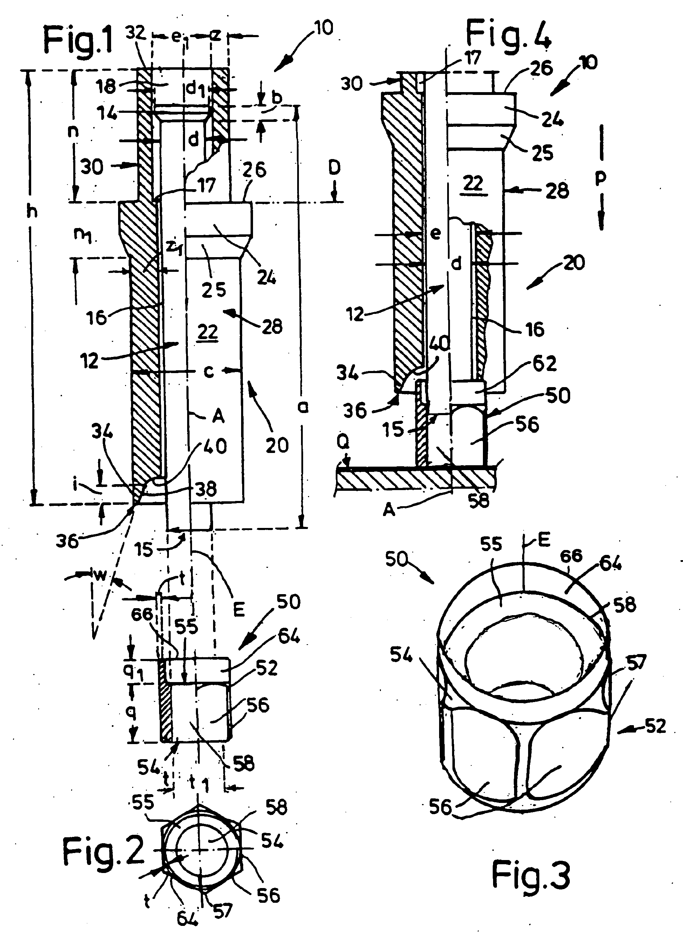

Ein metallisches Werkzeug 10 zum Bearbeiten eines ringartigen Werkstückes 50 weist einen Druckstempel 12 der Länge a von hier 76 mm sowie des Durchmessers d von etwa 10 mm auf, aus dessen in Fig. 1 oberem Ende ein zentrischer Anschlagteller 14 des Durchmessers d₁ von hier 12 mm und axialer Dicke b von 3 mm herausgeformt ist. Die Länge jenes Durchmessers d des Druckstempels 12 -- und damit von dessen Druckstirn 15 -- ist vom Durchmesser eines weiter unten beschriebenen Lochkanals einer Rohlingsmutter 52 abhängig. Der Druckstempel 12 lagert verschieblich in einem Führungskanal 16 eines hülsenartigen Gehäuses 20, dessen axiale Länge h hier mit 78 mm angegeben wird bei einem Außendurchmesser c von etwa 22 mm. Der Durchmesser e des in der Gehäuselängsachse A verlaufenden Führungskanals 16 ist geringfügig größer als der Durchmesser d jenes Druckstempel 12.

Im axialen Abstand n von 23 mm zum oberen Mündungsrand 32 des zylindrischen Gehäuses 20 ist an dessen Außenfläche 22 ein Ringkragen 24 angeformt. An einer von dessen in Fig. 1 oberen Ringkante 26 bestimmten Diametralebene D endet zum einen ein den Führungskanal 16 enthaltender Sockelabschnitt 28 des Gehäuses 20, der an jener Ebene D in einen -- den erwähnten Mündungsrand 32 anbietenden -- Kopfabschnitt 30 des Gehäuses 20 übergeht. Zum anderen mündet der Führungskanal 16 -- unter Bildung einer ringförmigen Innenstufe 17 als Anschlaggegenorgan für Anschlagteller 14 -- in einen ihn fortsetzenden Axialkanal 18, dessen Länge von jenem axialen Abstand n des Ringkragens 24 vom Mündungsrand 32 bestimmt ist und der im Kopfabschnitt 30 des Gehäuses 20 verläuft. Die Wanddicke z von 3 mm des Kopfabschnitts 30 ist geringer als die Wanddicke z₁ von etwa 5 mm des Sockelabschnitts 28. Im übrigen weist der Ringkragen 24 in seinem dem Sockelabschnitt 28 nahen Bereich eine zu letzterem geneigte Ringfläche 25 auf.

Das freie Ende des Sockelabschnittes 28 des Gehäuses 20 wird von einem Ringrand 34 der Höhe i von etwa 4 mm bestimmt, von dessen Ringkante 36 eine zur Längsachse A hin in einem Winkel w von etwa 25° geneigte Innenfläche 38 ausgeht. Diese Innenfläche 38 endet an einer querschnittlich zur Längsachse A geneigten Stirnfläche 40 des Gehäusesockelabschnitts 28.

Dem Gehäuse 20 bzw. dessen Ringrand 34 ist in Fig. 1 axial ein Werkstück 50 aus einem Metallwerkstoff zugeordnet. Es handelt sich dabei um den Rohling einer Rohlingsmutter 52 sechseckigen Grundrisses der -- von zwei Stirnflächen 54, 54ₜ der Rohlingsmutter 52 bestimmten -- axialen Höhe q von etwa 10 mm. Zwischen sechs -- in sich geradflächigenWandflächenabschnitten 56 der Rohlingsmutter 52 erstreckt sich in Werkstücklängsachse E ein Lochkanal 58. An die in Fig. 3 erkennbare obere Stirnfläche 54 ist -- unter Begrenzung einer innenliegenden ringartigen Auflagefläche 55achsparallel ein Ringkragen 64 der Höhe q₁ von beispielsweise 5 mm sowie geringer Wanddicke t angeformt, dessen freie Oberkante 66 ist von kreisförmigem Grundriss.

Dem einer bei Q skizzierten Grundfläche aufliegenden Werkstück 50 wird koaxial der Druckstempel 12 des Werkzeuges 10 so zugeführt, dass dessen Druckstirn 15 jene Auflagefläche 55 passiert, d.h. deren Innendurchmesser t₁ ist geringfügig länger als der Durchmesser d der Druckstirn 15. Beim Absenken des Gehäuses 20 in Druckrichtung P verformen die geneigten Innenflächen 38 von dessen Ringkante 36 sowie die anschließende Stirnfläche 40 den Ringkragen 64 des Werkstückes 50 gemäß Fig. 5, 6 auf dem Wege des Kaltfließpressens in einen querschnittlich achswärts gekrümmten Formkragen 74, nach dessen Entstehen im Lochkanal 58 ein Innengewinde 60 geformt -- beispielsweise geschnitten -- wird; so entsteht eine in Fig. 7 bis 10 skizzierte Befestigungsschraubmutter 70 mit -- jene achsparallelen Wandflächenabschnitte 56 anbietendem -- Schraubsockel 72 der Höhe y; jener Lochkanal 58 wird durch das Einformen des Innengewindes 60 zu einem Schraubloch bzw. einer Gewindebohrung 62. Dieser steht axial der Formkragen 74 mit querschnittlich achswärts gekrümmter Ober- oder Außenfläche 76 gegenüber. Dieser ist beim Pressen jenes Ringkragens 64 durch dessen querschnittliches Verformen entstanden und enthält eine umlaufende Innennut als Aufnahmeschlitz 78 für einen nicht gezeigten Einsatzring. Nach dem Einformen des Innengewindes 60 wird das Gehäuse 20 oder ein entsprechendes Werkzeug auf den Ringkragen 64 gedrückt und dieser noch etwas zum Innengewinde 60 hin verformt.

Der Querschnitt des nahe der Außenfläche 76 des Formkragens 74 verlaufenden Aufnahmeschlitzes 78 ist gemäß Fig. 10 zu seinen Randkanten 80 in einem flachen Winkel k geneigt, kann aber in anderer Ausgestaltung auch in einer Diametralebene des Formkragens 74 verlaufen, also ohne Querschnittsneigung. In Fig. 6 ist der Stirnbereich 81 des geneigten Formkragens 74 verdeutlicht, der beim Ausformen einer Aufstauchung ausgesetzt ist, wodurch sich am freien Ende ein Stauchwulst 84 bildet, der querschnittlich breiter ist als der Formkragen 74 an sich; diese Querschnittsunterschiede sind in Fig. 10 aus Gründen der Übersichtlichkeit nicht wiedergegeben.

In Fig. 10 ist ein Außenabsatz 82 der radialen Breite r zwischen dem achsparallelen Wandflächenabschnitt 56 und der Außenfläche 76 des Formkragens 74 zu erkennen, der Abschnitt der erwähnten oberen Stirnfläche 54 ist; die gezeigte radiale Breite r des Außenabsatzes 82 besteht nur an den achsparallelen Kanten 57 der Wandflächenabschnitte 56.

Nicht dargestellt ist der oben erwähnte Einsatzring, der als Ringelement im Aufnahmeschlitz 78 klemmend gehalten wird sowie achswärts die Randkanten 80 überragt und einem im Schraubloch 62 angeordneten Schraubstift od.dgl. anliegt als Halte- und/oder Dichtorgan. Je nach Funktion ist letzteres aus starrem oder aus begrenzt flexiblem Werkstoff hergestellt.

Bei der in Fig. 3 gezeigten Ausführungsform einer Rohlingsmutter 52 ist der Ringkragen 64 auf seiner zum Lochkanal 58 hin gewandten Innenseite gewindefrei. In den davon abweichenden Ausführungsformen einer fertig bearbeiteten Schraubmutter der Fig. 7 bis Fig. 10 einerseits und Fig. 11 bis Fig. 14 andererseits, trägt der Ringkragen auf seiner zur Gewindebohrung 62 hin gewandten Innenseite, d.h. im Stirnbereich 81 ein Gewinde.

Das Gewinde im Stirnbereich 81 ist mit einem leichten Versatz, vorliegend 1 bis 2 Zehntel Millimeter, gegenüber dem übrigen Innengewinde 60 versetzt. Beim Aufschrauben der Schraubmutter, beispielsweise der von Fig. 10 oder der von Fig. 14, wird der Formkragen 74 also gegen die mit S bezeichnete Pfeilrichtung "aufgebogen" und schnappt nach Erreichen des richtigen Gewindegangmaßes in die Gewindeflanken eines Bolzen oder Schraubengewindes ein - dies allerdings unter Beibehaltung einer gewissen Spannung, die durch den Versatz des im Stirnbereich 81 des achswärts gebogenen Ringkragens 64 angebrachten Gewindes erreicht und welche eine entsprechende in die mit S bezeichnete Pfeilrichtung wirkende Federkraft bewirkt. Damit wird eine zwischen der Schraubmutter und einem Bolzen oder einer Schraube geschlossene Schraubverbindung gegen Öffnen gesichert.

In einer zu den Fig. 7 bis Fig. 10 abgewandelten Ausführungsform zeigt Fig. 11 bis Fig. 14 eine Schraubmutter, bei welcher - ansonsten wie in den vorhergehenden Fig. 1 bis Fig. 10 dargestellten Schraubmutter - in Abwandlung der Ringkragen 64 querschnittlich achswärts so gebogen ist, dass der Aufnahmeschlitz 78 zur Gewindebohrung 62 hin geschlossen ist. Vorliegend liegen dazu die Randkanten 80 des Aufnahmeschlitzes 78 zur Gewindebohrung 62 aneinander. Anders gesagt, der Aufnahmeschlitz 78 hat eine in Fig. 14 zu erkennende querschnittliche tropfenförmige Berandung, so dass nunmehr die am Aufnahmeschlitz 78 verlaufenden Randkanten 80 gemäß dem Winkel k' - in Abwandlung des Winkels k in Fig. 10 - zueinander geneigt sind. Ein vollständiges Aneinanderliegen der Randkanten 80 des Aufnahmeschlitzes 78 zur Gewindebohrung 62 hin kann durch das des Formkragens 74 zum Innengewinde 60 hin erreicht werden, nachdem, wie erläutert, das Innengewinde 60 sowohl im Stirnbereich 81 als auch bei der übrigen Schraubmutter eingeformt ist. Das abschließende Versetzen des Formkragens 74 wird vorliegend ein letztes, entsprechend dem Versatz geringfügiges Einbiegen oder Einstauchen des Formkragen 74 erreicht. Grundsätzlich kann bei der in Fig. 10 dargestellten Ausführungsform ein Versatz größer ausgestaltet werden, während bei der in Fig. 14 dargestellten Ausführungsform eine sichernde, federnde Kraft aufgrund der stärkeren Verbiegung des Formkragens 74 erreicht werden kann. Der Versatz kann im Bereich von 1 bis 2 Gewindegängen liegen. Im Beispiel der Fig. 10 liegt der Versatz bei 1,5 Gewindegängen. Im Beispiel der Fig. 14 bei 1 Gewindegang. Bei beiden Ausführungsformen hat es sich als besonders vorteilhaft erwiesen, dass der dem Aufnahmeschlitz benachbarte Stirnbereich 81 des Formkragens 74 dicker ist als dessen anschließender Querschnitt, welcher - wie in Fig. 6 gezeigt - vergleichsweise dünn ist und damit leicht umgebogen werden kann und durch die Verarbeitung und Herstellung der Schraube erleichtert.

Fig. 15 zeigt eine im Vergleich zu Fig. 3 abgewandelte Ausführungsform eines Werkstücks 50', das ebenso wie das in Fig. 3 gezeigte Werkstück 50 als Grundlage für eine Schraubmutter nach Fig. 5 bis Fig. 14 dienen kann. Bei dem Werkstück 50' verläuft der Ringkragen nur abschnittsweise entlang des Umfangs des Werkstücks 50'. Vorliegend sind drei Abschnitte 64' vorgesehen, die durch drei Unterbrechungen in Form von Spalte 65 vollständig voneinander getrennt, an der Stirnfläche 54 des Werkstücks 50' angeformt sind.

Die Abschnitte 64' lassen sich, wie oben beschrieben (Fig. 5, Fig. 6), achswärts biegen, um eine Schraubmutter gemäß dem Konzept der Erfindung zu erhalten.

Die Federwirkung eines aus den Abschnitten 64' gebildeten Formkragens ist vergleichsweise leichtgängiger und flexibler als die eine entlang des vollen Umfangs verlaufenden Formkragens gemäß Fig. 7 bis Fig. 14.

## Patentansprüche

1. Schraubmutter aus metallischem Werkstoff mit einer Gewindebohrung (62) und einer deren Längsachse (E) radial umlaufend zugeordneten Innennut (78), wobei an eine der Stirnflächen (54) der Schraubmutter (70) ein Ringkragen (64) angeformt und querschnittlich so achswärts gebogen ist, dass er mit einem die Gewindebohrung (62) als Auflagefläche (55) umgebenden Abschnitt jener Stirnfläche einen dieser unmittelbar zugeordneten Aufnahmeschlitz (78) begrenzt,
**dadurch gekennzeichnet,**
**dass** der querschnittlich verformte Ringkragen (64) einen Formkragen (74) bildet und der dem Aufnahmeschlitz (78) benachbarte Stirnbereich (81) des Formkragens (74) einen Stauchwulst (84) aufweist, der querschnittlich breiter als der anschließende Querschnitt (Fig. 6) des Formkragens (74) ist und wobei der Stirnbereich (81) ein gegenüber einem übrigen Innengewinde (60) der Gewindebohrung (62) versetztes Gewinde trägt.

2. Schraubmutter mit von Wandflächenabschnitten (56) bestimmtem mehreckigem Grundriss nach Anspruch 1, **dadurch gekennzeichnet, dass** die Außenfläche (76) des Formkragens (74) in radialem Abstand (r) zu den achsparallelen Kanten (57) der Wandflächenabschnitte (56) der Schraubmutter (70) verläuft, wobei der Aufnahmeschlitz (78) nahe der Außenfläche des Formkragens angeordnet ist.

3. Schraubmutter nach Anspruch 2, **gekennzeichnet durch** eine querschnittlich achswärts gekrümmte Außenfläche (76) des Formkragens (74).

4. Schraubmutter nach Anspruch 2, **gekennzeichnet durch** eine querschnittlich abwärts gekrümmte Innenfläche des Formkragens (74).

5. Schraubmutter nach einem der Ansprüche 1 bis 4, **dadurch gekennzeichnet, dass** der zwei parallelen Randkanten (80) anbietende Aufnahmeschlitz (78) querschnittlich in einem Winkel (K') zu den Randkanten geneigt ist (Fig. 10).

6. Schraubmutter nach einem der Ansprüche 1 bis 5, **dadurch gekennzeichnet, dass** der Ringkragen (64) querschnittlich so achswärts gebogen ist, dass der Aufnahmeschlitz (78) zur Gewindebohrung (62) hin offen ist und die Randkanten (80) des Aufnahmeschlitzes (78) zur Gewindebohrung (62) hin beabstandet sind.

7. Schraubmutter nach einem der Ansprüche 1 bis 5, **dadurch gekennzeichnet, dass** der Ringkragen (64) querschnittlich so achswärts gebogen ist, dass der Aufnahmeschlitz (78) zur Gewindebohrung (62) hin geschlossen ist und die Randkanten (80) des Aufnahmeschlitzes (78) zur Gewindebohrung (62) aneinander liegen.

8. Schraubmutter nach einem der Ansprüche 1 bis 7, **dadurch gekennzeichnet, dass** der Ringkragen (64) an einer äußeren Wandung der Stirnfläche (54) verläuft.

9. Schraubmutter nach einem der Ansprüche 1 bis 8, **dadurch gekennzeichnet, dass** der Ringkragen (64) entlang eines vollen Umfangs der Schraubmutter verläuft.

10. Schraubmutter nach einem der Ansprüche 1 bis 8, **dadurch gekennzeichnet, dass** der Ringkragen entlang des Umfangs der Schraubmutter abschnittsweise verläuft.

11. Schraubmutter nach Anspruch 10, **dadurch gekennzeichnet, dass** benachbarte Abschnitte (64') des Ringkragens durch eine Unterbrechung (65) voneinander getrennt sind.

12. Schraubmutter nach einem der Ansprüche 1 bis 11, **dadurch gekennzeichnet, dass** in dem Aufnahmeschlitz (78) ein dessen Randkanten (80) achswärts überragendes Halte- und/oder Dichtorgan festgelegt ist.

13. Schraubmutter nach Anspruch 12, **gekennzeichnet durch** ein ringförmiges Halte- und/oder Dichtorgan.

14. Verfahren zum Herstellen einer Schraubmutter nach wenigstens einem der voranstehenden Ansprüche, wobei an einer Stirnfläche (54) einer dem Grundriss der Schraubmutter (70) entsprechenden Rohlingsmutter (52) ein Ringkragen (64) mit kreisförmiger freier Oberkante (66) angeformt und durch ein axial an letztere herangeführtes Druckwerkzeug (10) zur Längsachse (E) der Rohlingsmutter hin querschnittlich gekrümmt wird, **dadurch gekennzeichnet, dass** der Ringkragen (64.) in einem Stirnbereich (81) an seiner Oberkante (66) beim Verformen aufgestaucht wird (Fig. 6) und in einen axialen Lochkanal (58) und in den Stirnbereich (80) des gebogenen Formkragens (74) der Rohlingsmutter (52) ein Innengewinde (60) eingeformt wird, und nach dem Einformen des Innengewindes (60) der Rand des Formkragens (74) zum Innengewinde hin versetzt wird.

15. Verfahren nach Anspruch 14, **dadurch gekennzeichnet, dass** die freie Oberkante (66) des Ringkragens (64) umlaufend parallel an den benachbarten Innenbereich der Stirnfläche (54) der Rohlingsmutter (52) herangeführt und in Abstand zu diesem/dieser angeordnet wird.

16. Verfahren nach Anspruch 15, **dadurch gekennzeichnet, dass** zwischen dem Innenbereich der Stirnfläche (54) und der Innenfläche des Ringkragens (64) eine umlaufende Innennut (78) hergestellt wird.

17. Verfahren nach einem der Ansprüche 14 bis 16, **dadurch gekennzeichnet, dass** ein Innengewinde (60) eingeschnitten wird.

18. Werkzeug zur Durchführung des Verfahrens nach einem der Ansprüche 14 bis 17, zum Herstellen einer Schraubmutter nach einem der Ansprüche 1 bis 12, **dadurch gekennzeichnet, dass** ein Führungskanal (16) eines Gehäuses (20) für einen Druckstempel (12) an einem von einem Ringrand (34) einer Werkzeugstirnfläche (40) gebildeten Aufnahmebereich für ein Werkstück (50) endet und der Druckstempel im Führungskanal axial verschiebbar lagert, wobei am Druckstempel das Gehäuse (20) dem Ringkragen (64) des Werkstückes zuführbar angeordnet ist und zur Bildung des querschnittlich verformten Ringkragens (64) die Werkzeugstirnfläche (40) des Gehäuses (20) auf den Formkragen (74) des Werkstückes (50) aufsetzbar gestaltet ist und zur Bildung eines Stauchwulstes (84) an dem dem Aufnahmeschlitz (78) benachbarten Stirnbereich (81) des Formkragens (74) ein Durchmesser (d) des Druckstempels (12) abhängig vom Durchmesser eines Lochkanals (58) der Schraubmutter derart gewählt ist, dass der Stirnbereich (81) mit seiner Oberkante (66) den Druckstempel (12) anliegend beim Verformen aufstauchbar ist.

19. Werkzeug nach Anspruch 18, **dadurch gekennzeichnet, dass** der Ringrand (34) eine querschnittlich zu einer Stirnfläche (40) des Gehäuses (20) hin einwärts gekrümmte Innenfläche (38) zur Anlage eines Ringkragens (64) des Werkstückes (50) aufweist.

20. Werkzeug nach Anspruch 18 oder 19, **dadurch gekennzeichnet, dass** das der freie Druckstirn (15) ferne Ende des Druckstempels (12) mit wenigstens einem radial abkragenden Anschlagorgan (14) versehen und in dessen Bewegungsbahn eine Innenstufe (17) des Gehäuses (20) als Anschlagpartner für das Anschlagorgan des Druckstempels angeordnet ist (Fig. 1).

## Claims

1. Screw nut made of a metal material, having a threaded bore (62) and an inner groove (78) which is associated with the longitudinal axis (E) of said threaded bore in a radially circumferential manner, an annular collar (64) being integrally formed on one of the end faces (54) of the screw nut (70) and being bent in cross-section towards the axis in such a way as to delimit, together with a portion of this end face surrounding the threaded bore (62) as a bearing face (55), an accommodating slot (78) which is directly associated with said end face, **characterised in that** the annular collar (64) which is deformed in cross-section forms a shaped collar (74), and the end region (81), which is adjacent to the accommodating slot (78), of the shaped collar (74) comprises an upset ridge (84) which has a cross-section wider than the adjacent cross section (Fig. 6) of the shaped collar (74), the end region (81) having a thread which is offset from the remainder of the internal thread (60) of the threaded bore (62).

2. Screw nut having a polygonal basic outline determined by wall face portions (56) according to claim 1, **characterised in that** the outer face (76) of the shaped collar (74) extends at a radial distance (r) from the axially parallel edges (57) of the wall face portions (56) of the screw nut (70), the accommodating slot (78) being arranged close to the outer face of the shaped collar.

3. Screw nut according to claim 2, **characterised by** an outer face (76), which is curved in cross-section towards the axis, of the shaped collar (74).

4. Screw nut according to claim 2, **characterised by** an inner face, which is curved downwards in cross-section, of the shaped collar (74).

5. Screw nut according to any one of claims 1 to 4, **characterised in that** the accommodating slot (78), which provides two parallel peripheral edges (80), is inclined in cross-section at an angle (K') to the peripheral edges (Fig. 10).

6. Screw nut according to any one of claims 1 to 5, **characterised in that** the annular collar (64) is bent in cross-section towards the axis in such a way that the accommodating slot (78) is open towards the threaded bore (62) and the peripheral edges (80) of the accommodating slot (78) are spaced apart from one another towards the threaded bore (62).

7. Screw nut according to any one of claims 1 to 5, **characterised in that** the annular collar (64) is bent in cross-section towards the axis in such a way that the accommodating slot (78) is closed towards the threaded bore (62) and the peripheral edges (80) of the accommodating slot (78) are adjacent to one another towards the threaded bore (62).

8. Screw nut according to any one of claims 1 to 7, **characterised in that** the annular collar (64) extends on an outer wall of the end face (54).

9. Screw nut according to any one of claims 1 to 8, **characterised in that** the annular collar (64) extends along a full circumference of the screw nut.

10. Screw nut according to any one of claims 1 to 8, **characterised in that** the annular collar extends along portions of the circumference of the screw nut.

11. Screw nut according to claim 10, **characterised in that** adjacent portions (64') of the annular collar are separated from one another by an interruption (65).

12. Screw nut according to any one of claims 1 to 11, **characterised in that** a holding and/or sealing member is fixed in the accommodating slot (78) and protrudes over the peripheral edges (80) of said accommodating slot towards the axis.

13. Screw nut according to claim 12, **characterised by** an annular holding and/or sealing member.

14. Method for producing a screw nut according to at least one of the preceding claims, an annular collar (64) which has a circular free upper edge (66) being integrally formed on an end face (54) of a blank nut (52), which corresponds to the basic outline of the screw nut (70), and being curved in cross-section towards the longitudinal axis (E) of the blank nut by a compression tool (10) which is guided up to said free upper edge axially, **characterised in that** the annular collar (64) is upset in an end region (81) at the upper edge thereof (66) during the deformation (Fig. 6) and an internal thread (60) is moulded into an axial hole channel (58) and into the end region (80) of the bent shaped collar (74) of the blank nut (52), and once the internal thread (60) has been formed, the rim of the shaped collar (74) is offset towards the internal thread.

15. Method according to claim 14, **characterised in that** the free upper edge (66) of the annular collar (64) is guided up to the adjacent inner region of the end face (54) of the blank nut (52) in a circumferentially parallel manner and is arranged at a distance from said region/face.

16. Method according to claim 15, **characterised in that** a circumferential inner groove (78) is produced between the inner region of the end face (54) and the inner face of the annular collar (64).

17. Method according to any one of claims 14 to 16, **characterised in** an internal thread (60) is cut in.

18. Tool for carrying out the method according to any one of claims 14 to 17, for producing a screw nut according to any one of claims 1 to 12, **characterised in that** a guide channel (16) of a housing (20) for a pressure plunger (12) ends at an accommodating region, which is formed by an annular rim (34) of a tool end face (40), for a workpiece (50), and the pressure plunger is mounted axially displaceably in the guide channel, the housing (20) being arranged on the pressure plunger in such a way that said housing can be supplied to the annular collar (64) of the workpiece and the tool end face (40) of the housing (20) being constructed in such a way that said face can be positioned on the shaped collar (74) of the workpiece (50) to form the annular collar (64) which is deformed in cross-section, and a diameter (d) of the pressure plunger (12) being selected as a function of the diameter of a hole channel (58) of the screw nut in such a way that the end region (81) can be upset with the upper edge (66) thereof lying adjacent to the pressure plunger (12) during the deformation, to form an upset ridge (84) on the end region (81), adjacent to the accommodating slot (78), of the shaped collar (74).

19. Tool according to claim 18, **characterised in that** the annular rim (34) has an inner face (38), which is curved inwards in cross-section towards an end face (40) of the housing (20), for supporting an annular collar (64) of the workpiece (50).

20. Tool according to either claim 18 or claim 19, **characterised in that** the end of the pressure plunger (12) which is remote from the free pressure front end (15) is provided with at least one radially protruding stop member (14), and an inner step (17) of the housing (20) is arranged, as a stop partner for the stop member of the pressure plunger, in the trajectory of said stop member (Fig. 1).

## Revendications

1. Ecrou en matériau métallique avec un taraudage (62) et une rainure intérieure (78) associée de manière à faire le tour radialement de son axe longitudinal (E), un collet annulaire (64) étant formé sur l'une des faces avant (54) de l'écrou (70) et étant plié vers l'axe en section de sorte qu'il délimite avec une partie entourant le taraudage (62) comme surface d'appui (55) de chaque face avant, une fente de réception (78) associée directement à celle-ci,
**caractérisé en ce**
**que** le collet annulaire (64) déformé en section forme un collet moulé (74) et la zone avant (81) contigüe à la fente de réception (78) du collet moulé (74) présente un bourrelet (84) qui est plus large en section que la section contigüe (figure 6) du collet moulé (74) et la zone avant (81) portant un filetage décalé par rapport à un filetage intérieur (60) restant du taraudage (62).

2. Ecrou avec un plan polygonal déterminé par des parties de surface de paroi (56) selon la revendication 1, **caractérisé en ce que** la face extérieure (76) du collet moulé (74) s'étend à distance (r) radiale des arêtes (57) parallèles à l'axe des parties de surface de paroi (56) de l'écrou (70), la fente de réception (78) étant disposée près de la face extérieure du collet moulé.

3. Ecrou selon la revendication 2, **caractérisé par** une face extérieure (76) courbée vers l'axe en section du collet annulaire (74).

4. Ecrou selon la revendication 2, **caractérisé par** une face intérieure courbée vers le bas en section du collet moulé (74).

5. Ecrou selon l'une quelconque des revendications 1 à 4, **caractérisé en ce que** la fente de réception (78) offrant deux arêtes de bord (80) parallèles est inclinée en section dans un angle (K') par rapport aux arêtes de bord (figure 10).

6. Ecrou selon l'une quelconque des revendications 1 à 5, **caractérisé en ce que** le collet annulaire (64) est plié vers l'axe en section de sorte que la fente de réception (78) soit ouverte vers le taraudage (62) et les bords d'arête (80) de la fente de réception (78) soient espacés vers le taraudage (62).

7. Ecrou selon l'une quelconque des revendications 1 à 5, **caractérisé en ce que** le collet annulaire (64) est plié vers l'axe en section de sorte que la fente de réception (78) soit fermée vers le taraudage (62) et les arêtes de bord (80) de la fente de réception (78) reposent l'une sur l'autre vers le taraudage (62).

8. Ecrou selon l'une quelconque des revendications 1 à 7, **caractérisé en ce que** le collet annulaire (64) s'étend sur une paroi extérieure de la face avant (54).

9. Ecrou selon l'une quelconque des revendications 1 à 8, **caractérisé en ce que** le collet annulaire (64) s'étend le long d'une périphérie complète de l'écrou.

10. Ecrou selon l'une quelconque des revendications 1 à 8, **caractérisé en ce que** le collet annulaire s'étend par endroits le long de la périphérie de l'écrou.

11. Ecrou selon la revendication 10, **caractérisé en ce que** des parties (64') contigües du collet annulaire sont séparées les unes des autres par un creux (65).

12. Ecrou selon l'une quelconque des revendications 1 à 11, **caractérisé en ce qu'**un organe de retenue et/ou d'étanchéité dépassant vers l'axe de ses arêtes de bord (80) est fixé dans la fente de réception (78).

13. Ecrou selon la revendication 12, **caractérisé par** un organe de retenue et/ou d'étanchéité annulaire.

14. Procédé de fabrication d'un écrou selon au moins l'une quelconque des revendications précédentes, un collet annulaire (64) avec une arête supérieure (66) libre circulaire étant formé sur une face avant (54) d'un écrou d'ébauche (52) correspondant au plan de l'écrou (70) et étant courbé en section par un outil de pression (10) approché axialement de ce dernier vers l'axe longitudinal (E) de l'écrou d'ébauche, **caractérisé en ce que** le collet annulaire (64) est refoulé dans une zone avant (81) sur son arête supérieure (66) lors de la déformation (figure 6) et un filetage intérieur (60) est moulé dans un canal percé (58) axial et dans la zone avant (80) du collet moulé (74) plié de l'écrou d'ébauche (52) et le bord du collet moulé (74) est décalé après le moulage du filetage intérieur (60) vers le filetage intérieur.

15. Procédé selon la revendication 14, **caractérisé en ce que** l'arête supérieure (66) libre du collet annulaire (64) est approchée de manière périphérique et parallèle de la zone intérieure contigüe de la face avant (54) de l'écrou d'ébauche (52) et est disposée à distance de celle-ci/celui-ci.

16. Procédé selon la revendication 15, **caractérisé en ce qu'**entre la zone intérieure de la face avant (54) et la face intérieure du collet annulaire (64) est fabriquée une rainure intérieure (78) périphérique.

17. Procédé selon l'une quelconque des revendications 14 à 16, **caractérisé en ce qu'**un filetage intérieur (60) est entamé.

18. Outil de réalisation du procédé selon l'une quelconque des revendications 14 à 17, pour la fabrication d'un écrou selon l'une quelconque des revendications 1 à 12, **caractérisé en ce qu'**un canal de guidage (16) d'un boîtier (20) pour un poinçon (12) se termine sur une zone de réception formée par un bord annulaire (34) d'une face avant d'outil (40) pour une pièce à usiner (50) et le poinçon loge à coulissement axial dans le canal de guidage, le boitier (20) étant disposé sur le poinçon de manière à pouvoir être amené au collet annulaire (64) de la pièce à usiner et pour la formation du collet annulaire (64) déformé en section, la face avant d'outil (40) du boîtier (20) étant conçue de manière à pouvoir être placée sur le collet module (74) de la pièce à usiner (50) et pour la formation d'un bourrelet (84) sur la zone avant (81) contigüe à la fente de réception (78) du collet moulé (74), un diamètre (d) du poinçon (12) étant choisi selon le diamètre d'un canal percé (58) de l'écrou de telle sorte que la zone avant (81) puisse être refoulée de manière à reposer avec son arête supérieure (66) sur le poinçon (12) lors de la déformation.

19. Outil selon la revendication 18, **caractérisé en ce que** le bord annulaire (34) présente une face intérieure (38) courbée en section en dedans vers une face avant (40) du boîtier (20) pour l'appui d'un collet annulaire (64) de la pièce à usiner (50).

20. Outil selon la revendication 18 ou 19, **caractérisé en ce que** l'extrémité du poinçon (12) éloignée de la face avant de pression (15) libre est pourvue d'au moins un organe de butée (14) dépassant radialement et un gradin intérieur (17) du boîtier (20) est disposé dans sa trajectoire comme partenaire de butée pour l'organe de butée du poinçon (figure 1).
